# EUROPEAN PATENT APPLICATION

(11) **EP 4 694 293 A1**
(43) Date of publication of application: **11.02.2026**
(21) Application number: 24784117.4
(22) Date of filing: 26.03.2024
(51) Int. Cl.: H04W 24/08, H04W 24/10

(54) **MEASUREMENT METHOD AND APPARATUS**

(30) Priority: 06.04.2023 CN 202310388406
(71) Applicant: Huawei Technologies Co., Ltd., Shenzhen, Guangdong 518129 (CN)
(72) Inventor: ZHANG, Li, Shenzhen, Guangdong 518129 (CN); XU, Haibo, Shenzhen, Guangdong 518129 (CN); KUANG, Yiru, Shenzhen, Guangdong 518129 (CN); SHA, Tong, Shenzhen, Guangdong 518129 (CN); HAN, Jing, Shenzhen, Guangdong 518129 (CN)
(74) Representative: Maiwald GmbH
(86) International application number: PCT/CN2024/083867
(87) International publication number: WO 2024/208032

(57) **Abstract**

This application provides a measurement method and an apparatus. The method includes: A terminal device receives a first measurement configuration from a first network device in a first network, where the first measurement configuration indicates to measure the M measurement objects, and M is an integer greater than 0. The terminal device may cancel measurement on at least one of the M measurement objects, where a resource used to measure the at least one measurement object conflicts with a resource used by the terminal device in a second network. According to the foregoing method, when the first network indicates, to the terminal device, the M measurement objects that need to be measured, the terminal device determines that there is a measurement object in the M measurement objects that has a resource conflict with the second network. Consequently, when these measurement object configurations cannot be normally measured, the terminal device may cancel the measurement on these measurement objects, to avoid impact of the measurement objects on data transmission in the second network.

## Description

### CROSS-REFERENCE TO RELATED APPLICATIONS

This application claims priority to Chinese Patent Application No. 202310388406.0, filed with the China National Intellectual Property Administration on April 6, 2023 and entitled "MEASUREMENT METHOD AND APPARATUS", which is incorporated herein by reference in its entirety.

### TECHNICAL FIELD

This application relates to the field of communication technologies, and in particular, to a measurement method and an apparatus.

### BACKGROUND

A base station may send a measurement configuration to a terminal device. The measurement configuration includes measurement object (measurement object, MO) information, and the measurement object information indicates a parameter like a frequency on which the terminal device needs to perform measurement. The terminal device measures a serving cell or a non-serving cell on the frequency indicated by the measurement object information, and sends a measurement result to the base station. The base station may determine, based on the measurement result, whether to trigger the terminal device to perform cell handover.

When the terminal device includes a plurality of universal subscriber identity modules (universal subscriber identity module, USIM), networks corresponding to the plurality of universal subscriber identity modules may be different, and the plurality of universal subscriber identity modules share hardware resources of the terminal device. If the terminal device accesses a first network and a second network at the same time for communication, the first network configures a plurality of pieces of measurement object information for the terminal device. When a network state of the second network changes, hardware resources used by the terminal device in different networks conflict or collide.

Therefore, when the terminal device cannot perform measurement due to a network state change of another network, how the terminal device determines whether to continue to perform measurement is an urgent problem to be resolved.

### SUMMARY

This application provides a measurement method and an apparatus, so that a terminal device measures a measurement object.

According to a first aspect, this application provides a measurement method. The method is performed by a terminal device or one or more modules used for the terminal device. An example in which the method is performed by the terminal device is used for description herein. The method includes: receiving a first measurement configuration from a first network device in a first network, where the first measurement configuration indicates to measure the M measurement objects, and M is an integer greater than 0; and canceling measurement on at least one of the M measurement objects, where a resource used to measure the at least one measurement object conflicts with a resource used in a second network.

According to the foregoing method, when the first network indicates, to the terminal device, the M measurement objects that need to be measured, the terminal device determines that there is a measurement object in the M measurement objects that has a resource conflict with the second network. Consequently, when these measurement object configurations cannot be normally measured, the terminal device may cancel the measurement on these measurement objects, to avoid impact of the measurement objects on data transmission in the second network.

In a possible implementation, the first measurement configuration further indicates a priority of each of the M measurement objects.

In a possible implementation, the method further includes: sending first indication information to the first network device. The first indication information is information related to one or more measurement objects, and a resource used to measure the one or more measurement objects conflicts with the resource used in the second network.

According to the method, the terminal device indicates, to the first network based on the first indication information, a measurement object that cannot be normally measured by the terminal device. The first network may determine that measurement reporting is absent for the corresponding measurement object is because the terminal device cannot perform measurement, instead of because the terminal device does not find a cell for the measurement object. In this way, the first network may configure the terminal device to measure another measurement object that can be normally measured, to ensure mobility of the terminal device.

In a possible implementation, the first indication information includes one or more measurement object identifiers, and the one or more measurement object identifiers one-to-one correspond to the one or more measurement objects; or the first indication information includes a band identifier of at least one band, and the one or more measurement objects are measurement objects in the at least one band; or the first indication information includes a cell identifier of at least one serving cell, and the one or more measurement objects are measurement objects corresponding to the at least one serving cell.

In a possible implementation, the at least one measurement object is a measurement object whose priority is a low priority in the M measurement objects.

According to the method, when the first network indicates, to the terminal device, the M measurement objects that need to be measured, the priority may be configured for each measurement object. When the terminal device determines that there is a measurement object that has a resource conflict with the second network, the terminal device may determine, based on the priority of each measurement object, measurement objects to be measured, to ensure mobility of the terminal device in the first network. Correspondingly, the network device may configure a high priority for a measurement object to ensure that the terminal device still measures the measurement object even if there is the resource conflict.

In a possible implementation, the method further includes: receiving a second measurement configuration from the first network device. The second measurement configuration indicates that N measurement objects are measured, N is an integer greater than or equal to 0, and the second measurement configuration is a configuration obtained by updating the first measurement configuration.

In a possible implementation, the N measurement objects do not include a first measurement object, and the first measurement object is a measurement object in the one or more measurement objects, and is not a measurement object in the M measurement objects.

According to the foregoing method, the first network releases a measurement object that cannot be measured or avoids configuring a measurement object that cannot be measured, and aligns network behavior of the first network and the terminal device, thereby improving system efficiency.

In a possible implementation, the method further includes: if the N measurement objects include a first measurement object, sending second indication information to the first network device. The second indication information indicates that a measurement configuration for the first measurement object fails, and the first measurement object is a measurement object in the one or more measurement objects, and is not a measurement object in the M measurement objects.

In a possible implementation, the second measurement configuration further indicates a priority of each of the N measurement objects, and the first measurement object is the measurement object in the one or more measurement objects, is not the measurement object in the M measurement objects, and is of a low priority.

In a possible implementation, the method further includes: measuring a second measurement object. The second measurement object is a measurement object with a high priority in the M measurement objects or the N measurement objects, and a resource used to measure the second measurement object conflicts with the resource used in the second network.

In a possible implementation, the method further includes: sending third indication information to a second network device in the second network. The third indication information indicates time information of a link interruption between the terminal device and the second network device, and the terminal device measures the second measurement object within time corresponding to the time information; or the third indication information indicates that a measurement object in the first network is to be measured.

In a possible implementation, that the first measurement configuration further indicates the priority of each of the M measurement objects includes: The first measurement configuration includes M pieces of first information, one of the M pieces of first information corresponds to one of the M measurement objects, and the first information indicates a priority marker of a measurement object corresponding to the first information; or the first measurement configuration includes at least one preset condition, one of the at least one preset condition corresponds to one of the M measurement objects, and the preset condition is a condition that a priority of the measurement object corresponding to the preset condition is a high priority.

According to a second aspect, this application provides a measurement method. The method is performed by a network device or one or more modules used for the network device. An example in which the method is performed by the network device is used for description herein. The method includes: receiving first indication information from a terminal device, where the first indication information is information related to one or more measurement objects, and a resource used by the terminal device to measure the one or more measurement objects conflicts with a resource used by the terminal device in a second network; and sending a second measurement configuration to the terminal device, where the second measurement configuration indicates that N measurement objects are measured, N is an integer greater than 0, and measurement objects whose priorities are low priorities in the N measurement objects do not include a measurement object that meets the following condition: a measurement object in the one or more measurement objects.

In a possible implementation, the first indication information includes one or more measurement object identifiers, and the one or more measurement object identifiers one-to-one correspond to the one or more measurement objects; or the first indication information includes a band identifier of at least one band, and the one or more measurement objects are measurement objects in the at least one band; or the first indication information includes a cell identifier of at least one serving cell, and the one or more measurement objects are measurement objects corresponding to the at least one serving cell.

In a possible implementation, the second measurement configuration further indicates a priority of each of the N measurement objects.

In a possible implementation, the measurement objects whose priorities are the low priorities in the N measurement objects do not include the measurement object that meets the following condition: the measurement object in the one or more measurement objects.

In a possible implementation, that the second measurement configuration further indicates the priority of each of the N measurement objects includes: The first measurement configuration includes N pieces of first information, one of the N pieces of first information corresponds to one of the N measurement objects, and the first information indicates a priority marker of a measurement object corresponding to the first information; or
the first measurement configuration includes at least one preset condition, one of the at least one preset condition corresponds to one of the N measurement objects, and the preset condition is a condition that a priority of the measurement object corresponding to the preset condition is a high priority.

According to a third aspect, this application provides a measurement method. The method is performed by a terminal device or one or more modules used for the terminal device. An example in which the method is performed by the terminal device is used for description herein. The method includes: receiving a first measurement configuration from a first network device in a first network, where the first measurement configuration indicates to measure the M measurement objects, and M is an integer greater than 0; and if a resource used in a first serving cell conflicts with a resource used by the terminal device in a second network, when a first condition is met, canceling measurement on a third measurement object that is in the M measurement objects and that corresponds to the first serving cell. The first condition includes: The first serving cell cannot be used for handover to a primary cell.

According to the method, when the terminal device cannot measure measurement objects corresponding to the first serving cell configured by the first network, and the first serving cell cannot be used for the handover to the primary cell, the terminal device may cancel measurement on these measurement objects, thereby avoiding impact on the second network during the measurement.

In a possible implementation, the stopping the measurement on the third measurement object that is in the M measurement objects and that corresponds to the first serving cell includes: receiving a resource release command for the first serving cell from the first network device, and stopping the measurement on the third measurement object; or if the resource release command is not received but a preconfigured timer expires, stopping the measurement on the third measurement object.

In a possible implementation, the third measurement object is measured when a second condition is met. The second condition includes: The first serving cell can be used for the handover to the primary cell.

According to the method, when the first serving cell can be used for the handover to the primary cell, the terminal device still measures these measurement objects, to ensure mobility of the terminal device in the first network.

In a possible implementation, if the third measurement object is measured, the method further includes: sending third indication information to a second network device in the second network. The third indication information indicates time information of a link interruption between the terminal device and the second network device, and the terminal device measures the second measurement object within time corresponding to the time information; or the third indication information indicates that a measurement object in the first network is to be measured by the terminal device.

In a possible implementation, the first measurement configuration further indicates a priority of each of the M measurement objects.

In a possible implementation, the second condition further includes: A priority of the third measurement object is a high priority.

In a possible implementation, the first condition includes: The first serving cell cannot be used for the handover to the primary cell, or the first condition includes: The first serving cell can be used for the handover to the primary cell, and the priority of the third measurement object is a low priority.

In a possible implementation, that the first measurement configuration further indicates the priority of each of the M measurement objects includes: The first measurement configuration includes M pieces of first information, one of the M pieces of first information corresponds to one of the M measurement objects, and the first information indicates a priority marker of a measurement object corresponding to the first information; or the first measurement configuration includes at least one preset condition, one of the at least one preset condition corresponds to one of the M measurement objects, and the preset condition is a condition that a priority of the measurement object corresponding to the preset condition is a high priority.

According to a fourth aspect, this application further provides a communication apparatus, and the communication apparatus can implement any method according to the first aspect to the third aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus to perform a corresponding function of the network device or the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal apparatus.

In a possible implementation, the communication apparatus includes corresponding function modules configured to implement the steps in the foregoing method. The functions may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method according to any one of the first aspect to the third aspect. Details are not described herein.

According to a fifth aspect, a communication apparatus is provided. The communication apparatus includes a processor and an interface circuit. The interface circuit is configured to: receive a signal from a communication apparatus other than the communication apparatus, and transmit the signal to the processor, or send a signal from the processor to a communication apparatus other than the communication apparatus. The processor is configured to implement the method according to any one of the first aspect to the third aspect, and any possible implementation of any one of the aspects by using a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus, and transmit the signal to the processor, or send a signal from the processor to a communication apparatus other than the communication apparatus. The processor is configured to implement the functional module of the method according to any one of the first aspect to the third aspect, and any possible implementation of any one of the aspects by using a logic circuit or by executing code instructions.

According to a seventh aspect, a computer-readable storage medium is provided. The computer-readable storage medium stores a computer program or instructions. When the computer program or the instructions are executed by a processor, the method according to any one of the first aspect to the third aspect, and any possible implementation of any one of the aspects is implemented.

According to an eighth aspect, a computer program product storing instructions is provided. When the instructions are run by a processor, the method according to any one of the first aspect to the third aspect, and any possible implementation of any one of the aspects is implemented.

According to a ninth aspect, a circuit is provided. The circuit is configured to perform the method according to any one of the first aspect to the third aspect, and the circuit may include a chip circuit. Optionally, the circuit may be further coupled to a memory.

According to a tenth aspect, a chip is provided. The chip includes a processor, configured to implement the method according to any one of the first aspect to the third aspect, and any possible implementation of any one of the aspects. Optionally, the chip may further include a memory. The chip may include a chip, or may include a chip and another discrete component.

According to an eleventh aspect, a communication system is provided, including a network device and a terminal device.

The terminal device is configured to implement the method according to any one of the first aspect and the possible implementations of the first aspect. The network device is configured to implement the method according to any one of the second aspect and the possible implementations of the second aspect.

### BRIEF DESCRIPTION OF DRAWINGS

FIG. 1(a) is a diagram of a structure of a network device according to an embodiment of this application;
FIG. 1(b) is a diagram of a structure of a network device according to an embodiment of this application;
FIG. 2(a) is a diagram of a structure of a communication system according to an embodiment of this application;
FIG. 2(b) is a diagram of an application scenario according to an embodiment of this application;
FIG. 3 is a schematic flowchart of a measurement method according to an embodiment of this application;
FIG. 4 is a schematic flowchart of a measurement method according to an embodiment of this application;
FIG. 5 is a schematic flowchart of a measurement method according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

The following describes in detail embodiments of this application with reference to the accompanying drawings of the specification.

Embodiments of this application may be applied to various mobile communication systems, for example, internet of things (internet of things, IoT), narrowband internet of things (narrowband internet of things, NB-IoT), long term evolution (long term evolution, LTE), a 5th generation (5th generation, 5G) communication system (for example, 5G new radio (new radio, NR)), a hybrid architecture of LTE and 5G, or a new communication system emerging in 6G or future communication development. Embodiments of this application may be further applied to a non-terrestrial network (non-terrestrial network, NTN), a machine to machine (machine to machine, M2M) network, a machine type communication (machine type communication, MTC) network, or another network. The method provided in embodiments of this application may be further applied to fields such as vehicle-to-everything (vehicle-to-everything, V2X) communication, internet of vehicles, self-driving, and assisted driving. This is not specifically limited herein.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

The following first describes some terms in embodiments of this application, to facilitate understanding of a person skilled in the art.

In embodiments of this application, the network device may be an access network device in a wireless network. For example, the network device may be a radio access network (radio access network, RAN) node that connects a terminal device to the wireless network, and may also be referred to as an access network device. The network device includes but is not limited to an evolved NodeB (evolved NodeB, eNB), a base transceiver station (base transceiver station, BTS), a home base station (for example, home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission reception point (transmission reception point, TRP), or the like, and may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the network device may be a network node that forms a base station or a transmission point, for example, a BBU or a distributed unit (distributed unit, DU).

For example, the network device may alternatively be a macro base station, may be a micro base station or an indoor base station, or may be a relay node, a donor node, or the like. It may be understood that all or some functions of the radio access network device in this application may also be implemented by using a software function running on hardware, or may be implemented by using an instantiated virtualization function on a platform (for example, a cloud platform). A specific technology and a specific device form that are used by the radio access network device are not limited in embodiments of this application. For ease of description, the following provides descriptions by using an example in which the radio access network device is a base station.

In some deployments, the network device may include a central unit (central unit, CU) and a DU. The network device may further include an active antenna unit (active antenna unit, AAU). The CU performs some functions of the gNB, and the DU performs some functions of the gNB. For example, the CU is responsible for processing a non-real-time protocol and service, to implement functions of a radio resource control (radio resource control, RRC) layer. The DU is responsible for processing a physical layer protocol and a real-time service, and implementing functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

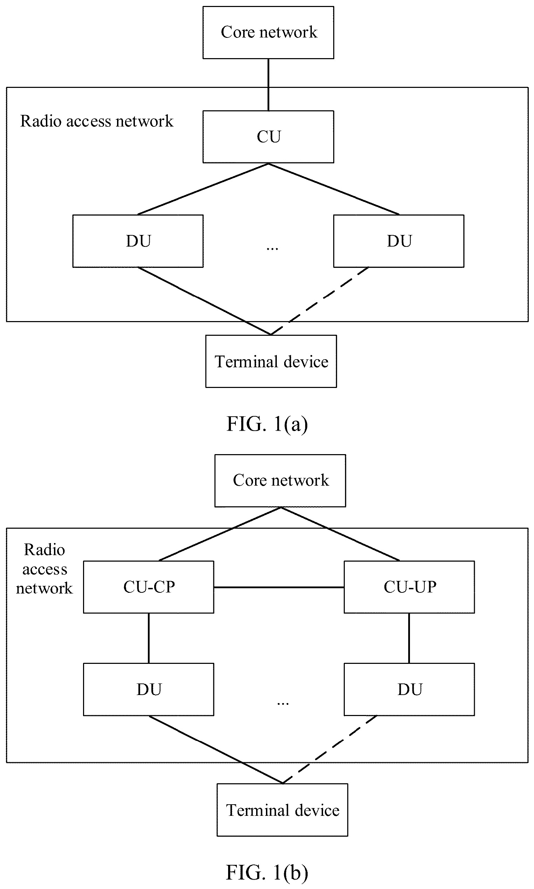

For example, as shown in FIG. 1(a), the scenario is a scenario in which a CU and a DU are separately deployed. In the scenario, a network device includes the CU and the DU. The CU is configured to communicate with a core network, and the DU is configured to communicate with a terminal device.

As shown in FIG. 1(b), the scenario is a scenario in which a CU-CP, a CI-UP, and a DU are separately deployed. In the scenario, a network device includes the CU-CP, the CI-UP, and the DU. The CU-CP is configured to communicate with a control plane of a core network, the CU-UP is configured to communicate with a user plane of the core network, and the DU is configured to communicate with a terminal device.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. Either the CU (or the CU-CP or the CU-UP) or the DU in this application may be implemented by using a software module, a hardware module, or a combination of a software module and a hardware module.

The terminal device in embodiments of this application may be a wireless terminal apparatus that can receive scheduling and indication information from the network device. The terminal device may also be referred to as user equipment (user equipment, UE), a mobile station (mobile station, MS), a mobile terminal (mobile terminal, MT), or the like. Examples of some terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, a telematics box (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like.

In embodiments of this application, an apparatus configured to implement a function of the terminal device may be the terminal device, or may be an apparatus that can support the terminal device to implement the function, for example, a chip system, where the apparatus may be mounted in the terminal device. In the technical solutions provided in embodiments of this application, the technical solutions provided in embodiments of this application are described by using an example in which the apparatus configured to implement the function of the terminal device is the terminal device.

A universal subscriber identity module may be, for example, a subscriber identity module (subscriber identity module, SIM) (or referred to as a subscriber identity card, a customer identity card, a telephone card, or a smart card), or an embedded subscriber identity module (embedded-SIM, eSIM), or another information module or identifier module that can identify a terminal device in a network. Embodiments of this application include but are not limited to the foregoing examples. The terminal device in embodiments of this application supports communication with a plurality of networks via a plurality of universal subscriber identity modules. For example, the terminal device is a terminal device supporting dual-SIM dual-active (dual-SIM dual-active, DSDA), or a terminal device supporting dual receive dual-SIM dual-standby (dual receive-DSDS, DR-DSDS).

Intra-frequency measurement and inter-frequency measurement: If there is a serving cell on a to-be-measured frequency, measurement on the frequency is the intra-frequency measurement; and if there is no serving cell on the to-be-measured frequency, that is, all to-be-measured cells on the frequency are non-serving cells, the measurement on the frequency is the inter-frequency measurement.

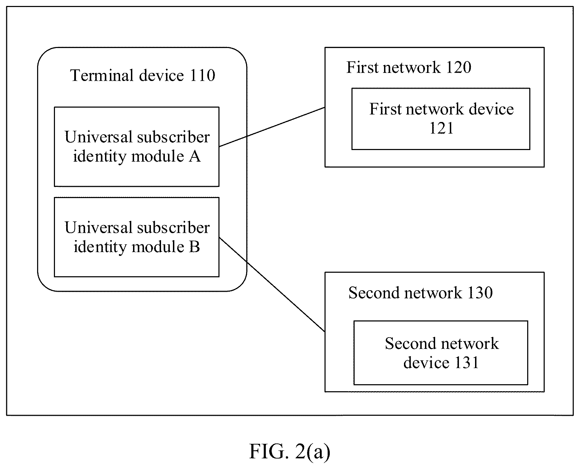

FIG. 2(a) is a diagram of a structure of a communication system according to an embodiment of this application. The communication system shown in FIG. 2(a) may be, for example, an NR communication system or a communication system in a future evolved technology. This is not limited in this embodiment of this application. As shown in FIG. 2(a), the scenario includes a terminal device 110 and a plurality of networks. In FIG. 2(a), an example in which the plurality of networks include a first network 120 and a second network 130 is used. For an implementation of the terminal device 110, refer to the content described above. The network is configured to provide a service for the terminal device 110. The first network 120 may communicate with the terminal device 110, and the second network 130 may also communicate with the terminal device 110.

The terminal device in this embodiment of this application can support a multi-universal subscriber identity module (multi-universal subscriber identity module, MUSIM), that is, a plurality of universal subscriber identity modules can be mounted on the terminal device. Correspondingly, the terminal device 110 may be referred to as a MUSIM terminal device, or the terminal device that supports the MUSIM. For example, in FIG. 2(a), a quantity of the plurality of universal subscriber identity modules is two. The two universal subscriber identity modules specifically include a universal subscriber identity module A and a universal subscriber identity module B, and actually, the quantity of universal subscriber identity modules of the terminal device 110 is not limited. The universal subscriber identity module A may also be referred to as a first universal subscriber identity module, and the universal subscriber identity module B may also be referred to as a second universal subscriber identity module. The universal subscriber identity module may be considered as a logical concept. For example, the universal subscriber identity module may be a SIM, an eSIM, or another information module or identifier module that can identify the terminal device 110.

The universal subscriber identity module A and the universal subscriber identity module B may be provided by a same operator, and correspondingly, the first network 120 and the second network 130 may also correspond to a same operator. The universal subscriber identity module A and the universal subscriber identity module B may alternatively be provided by different operators, and correspondingly, the first network 120 and the second network 130 may also correspond to different operators.

The first network 120 may be configured to provide a service for the universal subscriber identity module A, or may be described as that the first network 120 corresponds to the universal subscriber identity module A of the terminal device 110. The first network 120 may include one or more devices configured to provide a communication service for the terminal device 110. For example, the first network 120 includes a first network device 121, and the first network device 121 is configured to provide a service for the universal subscriber identity module A of the terminal device 110. This may also be described as that the first network device 121 corresponds to the universal subscriber identity module A of the terminal device 110. Because the first network device 121 belongs to the first network 120, the first network device 121 in this embodiment of this application may also be replaced with the first network 120. The first network device 121 is, for example, an access network device or a core network device.

Similarly, the second network 130 may be configured to provide a service for the universal subscriber identity module B. This may also be described as that the second network 130 corresponds to the universal subscriber identity module B of the terminal device 110. The second network 130 may include one or more devices configured to provide a communication service for the terminal device 110. For example, the second network 130 includes a second network device 131, and the second network device 131 is configured to provide a service for the universal subscriber identity module B of the terminal device 110. This may also be described as that the second network device 131 corresponds to the universal subscriber identity module B of the terminal device 110. Because the second network device 131 belongs to the second network 130, the second network device 131 in this embodiment of this application may also be replaced with the second network 130. The second network device 131 is, for example, an access network device or a core network device.

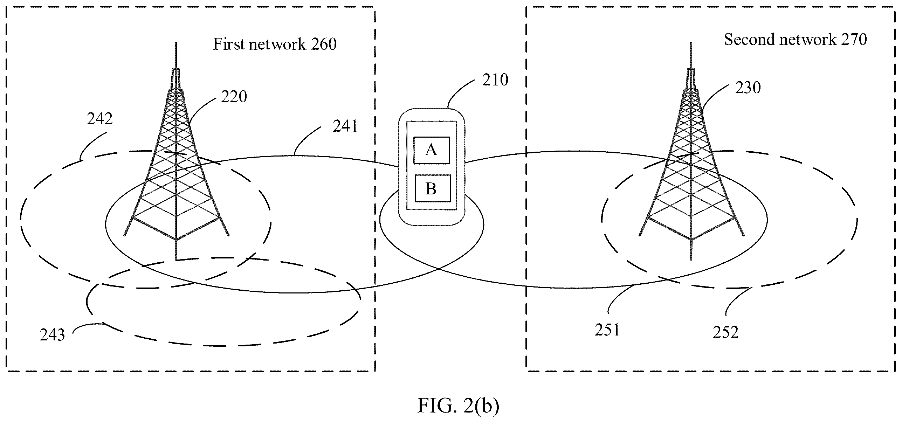

FIG. 2(b) is a diagram of an application scenario according to an embodiment of this application. Alternatively, FIG. 2(b) may be understood as a diagram of deployment of devices included in the communication system shown in FIG. 2(a). As shown in FIG. 2(b), the scenario includes a terminal device 210 and a plurality of networks. In FIG. 2(b), an example in which the plurality of networks include a first network 260 and a second network 270 is used.

For example, in FIG. 2(b), the terminal device 210 includes a universal subscriber identity module A (represented by "A" in the figure) and a universal subscriber identity module B (represented by "B" in the figure). The universal subscriber identity module A may also be referred to as a first universal subscriber identity module, and the universal subscriber identity module B may also be referred to as a second universal subscriber identity module.

For example, the first network 260 includes a first network device 220, and the first network device 220 may provide a service for the universal subscriber identity module A of the terminal device 210. This may also be described as that the first network device 220 (or the first network 260) corresponds to the universal subscriber identity module A of the terminal device 210. Because the first network device 220 belongs to the first network 260, the first network device 220 in this embodiment of this application may also be replaced with the first network 260. The first network device 220 is, for example, an access network device or a core network device.

The second network 270 includes a second network device 230, and the second network device 230 is configured to provide a service for the universal subscriber identity module B. This may also be described as that the second network device 230 (or the second network 270) corresponds to the universal subscriber identity module B of the terminal device 210. Because the second network device 230 belongs to the second network 270, the second network device 230 in this embodiment of this application may also be replaced with the second network 270. The second network device 230 is, for example, an access network device or a core network device.

The first network device 220 may provide at least one cell (cell). This may also be described as that the first network device 220 corresponds to the at least one cell. For example, in FIG. 2(b), the at least one cell provided by the first network device 220 includes a first cell 241, a second cell 242, and a third cell 243. The first network device 220 may provide a service for a terminal device in the at least one cell. The first cell 241, the second cell 242, and the third cell 243 may be on a same frequency, or may be on different frequencies. It should be understood that there may be a plurality of first network devices 220 in the first network 260, and each first network device 220 provides at least one cell.

Similarly, the second network device 230 may provide at least one cell. This may also be described as that the second network device 230 corresponds to the at least one cell. For example, in FIG. 2(b), the at least one cell provided by the second network device 230 includes a fourth cell 251 and a fifth cell 252. The second network device 230 may provide a service for a terminal device in the at least one cell. The fourth cell 251 and the fifth cell 252 may be on a same frequency, or may be on different frequencies. It should be understood that there may be a plurality of second network devices 230 in the second network 270, and each second network device 230 provides at least one cell. In a possible implementation, the terminal device 210 may camp on a plurality of cells, and at least one of the plurality of cells provides a service for one universal subscriber identity module of the terminal device 210.

For example, that the first cell 241 provides a service for the universal subscriber identity module A may be described as that the universal subscriber identity module A corresponds to the first cell 241. In this case, the first cell 241 may be considered as a serving cell of the universal subscriber identity module A of the terminal device 210, and the second cell 242 and the third cell 243 may be considered as non-serving cells or neighboring cells of the universal subscriber identity module A of the terminal device 210.

That the fourth cell 251 provides a service for the universal subscriber identity module B may be described as that the universal subscriber identity module B corresponds to the fourth cell 251. In this case, the fourth cell 251 may be considered as a serving cell of the universal subscriber identity module B of the terminal device 210, and the fifth cell 252 may be considered as a non-serving cell or a neighboring cell of the universal subscriber identity module B of the terminal device 210.

In a possible implementation, the universal subscriber identity module A is a primary universal subscriber identity module (or referred to as a primary card) of the terminal device 210, and the universal subscriber identity module B is a secondary universal subscriber identity module (or referred to as a secondary card) of the terminal device 210. Alternatively, the universal subscriber identity module A is a secondary universal subscriber identity module of the terminal device 210, and the universal subscriber identity module B is a primary universal subscriber identity module of the terminal device 210.

When the terminal device includes the plurality of universal subscriber identity modules, resources used by the terminal device to communicate with a plurality of network devices in the plurality of networks are shared. Therefore, when the terminal device communicates with the plurality of network devices at the same time, a conflict may occur on the resources of the terminal device. Consequently, communication between the terminal device and one of the network devices is interrupted, communication quality of the terminal device is affected, and user experience is severely affected.

In this application, the resources used by the terminal device include resources such as a baseband resource and a radio frequency resource. The baseband resources include resources such as a processor and a memory. The radio frequency resource includes an antenna, a radio frequency front end module (front end module, FEM), a radio frequency integrated circuit (radio frequency integrated circuit, RFIC) channel, and the like.

For example, the radio frequency resource of the terminal device includes three radio frequency links, and in a network corresponding to the universal subscriber identity module A, three configured carrier components (carrier component, CC) include a primary carrier component (primary carrier component, PCC) on a band (band) A, a secondary carrier component (secondary carrier component, SCC) 1 on a band B, and an SCC 2 on a band X. The PCC is associated with a radio frequency link 1 of the terminal device, the SCC 1 is associated with a radio frequency link 2 of the terminal device, and the SCC 2 is associated with a radio frequency link 3 of the terminal device. In a network corresponding to the universal subscriber identity module B, a configured CC is a PCC, and is associated with the radio frequency link 3 of the terminal device. Because the radio frequency link 3 is associated with two CCs at the same time, but the radio frequency link can provide a service for only one of the CCs at a same moment, a conflict may occur on radio frequency resources used by the terminal device when the terminal device performs communication on the two CCs at the same time. When the network schedules the terminal device to perform data transmission on the two CCs at the same time, the terminal device can transmit data only on one of the CCs, and cannot transmit data on the other CC.

With reference to the foregoing description, when a resource used by the terminal device to measure measurement objects in the first network conflicts with a resource used for data transmission in the second network, if the terminal device stops performing measurement in the first network, measurement results cannot be obtained from the first network, and the first network cannot determine whether measurement reporting is absent for the measurement objects because the terminal device cannot perform measurement or because the terminal device does not find cells for the measurement objects. If the terminal device continues to measure a plurality of measurement objects in the first network, communication in the second network may be frequently interrupted.

Therefore, this application provides a method, to reduce frequency of communication interruption in the second network when the terminal device measures the measurement object, and improve communication reliability.

A network architecture and a service scenario described in embodiments of this application are intended to describe the technical solutions in embodiments of this application more clearly, and do not constitute a limitation on the technical solutions according to embodiments of this application. A person of ordinary skill in the art may know that with evolution of a network architecture and emergence of a new service scenario, the technical solutions according to embodiments of this application are also applicable to similar technical problems.

When the following method procedures in this application are applied to the system shown in FIG. 2(a) or FIG. 2(b), the first network device in FIG. 2(a) or FIG. 2(b), or a module used in the first network device, or a chip used in the first network device may perform the method performed by the first network device in the following procedure. The second network device in FIG. 2(a) or FIG. 2(b), or a module used in the second network device, or a chip used in the second network device may perform the method performed by the second network device in the following procedure. The terminal device in FIG. 2(a) or FIG. 2(b), or a module used in the terminal device, or a chip used in the terminal device may perform the method performed by the terminal device in the following procedure. It may be understood that a specific structure of an execution body of the method provided in embodiments of this application is not specifically limited in embodiments shown below, provided that a program that records code of the method provided in embodiments of this application can be run to perform communication according to the method provided in embodiments of this application. The following uses only a terminal device or a network device as an example for description. In the following procedures, an example in which a first network device in a first network provides a service for a universal subscriber identity module A (or referred to as a first universal subscriber identity module) of a terminal device, and a second network device in a second network provides a service for a universal subscriber identity module B (or referred to as a second universal subscriber identity module) of the terminal device is used for description. Another case may be deduced by analogy. Details are not described herein.

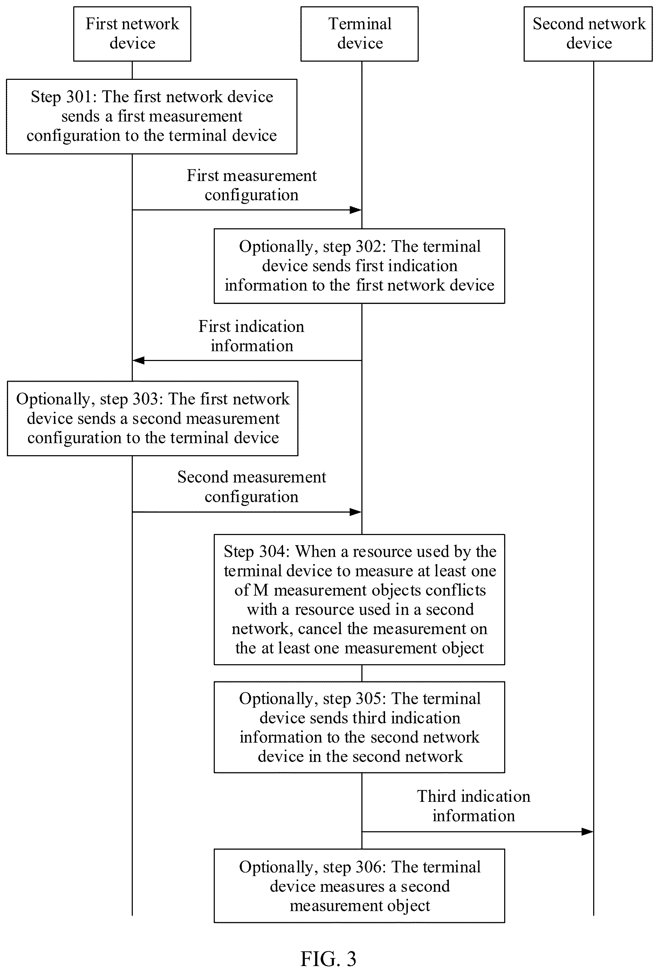

FIG. 3 is a schematic flowchart of a measurement method according to an embodiment of this application.

Step 301: A first network device sends a first measurement configuration to a terminal device.

Correspondingly, the terminal device receives the first measurement configuration from the first network device.

The first network device is located in a first network. The first network device may predetermine M measurement objects that need to be measured by the terminal device. How the first network device determines the M measurement objects is not limited in this application. For example, if the first network device needs to obtain a parameter like signal quality of a frequency, the frequency may be configured as a measurement object that needs to be measured by the terminal device.

In this application, the first measurement configuration indicates to measure the M measurement objects, and M is an integer greater than 0.

In an implementation, the first measurement configuration may include measurement configuration information of the M measurement objects. To be specific, the first network device may configure one piece of measurement configuration information for each measurement object, the piece of measurement configuration information may indicate one frequency, and the frequency is a measurement object that needs to be measured. The measurement configuration information may further include information like a synchronization signal block measurement time configuration (synchronization signal block measurement timing configuration, SMTC) parameter used to perform measurement on the frequency. The SMTC parameter indicates time for measuring a measurement object. The SMTC parameter may include at least one of an SMTC period, an SMTC location, and an SMTC length. There are one or more to-be-measured cells on one frequency.

In an implementation, when the terminal device measures one or more of the M measurement objects, if a measurement gap is needed, the first measurement configuration may further include a measurement gap (measurement gap) parameter. The measurement gap parameter includes at least one of a measurement gap period, a measurement gap location, and a measurement gap length.

The first measurement configuration may include only one measurement gap parameter, and a plurality of measurement objects share the measurement gap parameter. Generally, when the network device configures the measurement object, if the network device determines a no-gap measurement capability corresponding to any one of the M measurement objects, and indicates the terminal device to use the measurement gap parameter when measuring the measurement object, the network device configures the measurement gap parameter. A no-gap measurement capability corresponding to each measurement object may be reported by the terminal device to the network device.

If the first measurement configuration includes the measurement gap parameter, that is, the measurement gap parameter is configured for the terminal device, the terminal device measures, in the first network within a measurement gap, a measurement object that needs the measurement gap, and the terminal device cannot perform communication (or referred to as data transmission and reception) with a serving cell in the first network within the measurement gap. Correspondingly, if no measurement gap parameter is configured for the terminal device, when measuring a measurement object that does not need a measurement gap, the terminal device may communicate with the serving cell in the first network.

In this application, the first measurement configuration further indicates a priority of each of the M measurement objects.

Implementation 1: The first measurement configuration includes M pieces of first information, one of the M pieces of first information corresponds to one of the M measurement objects, and the first information indicates a priority of a measurement object corresponding to the first information. For example, the first information may be 1-bit indication information, and the first information may be included in configuration information of a measurement object corresponding to the first information. For example, when the network device configures a bit as 1, a measurement object corresponding to the bit is of a high priority; and when the network device configures the bit as 0, the measurement object corresponding to the bit is of a low priority. Alternatively, when the network device configures a bit, a measurement object corresponding to the bit is of a high priority; and when the network device does not configure the bit, the measurement object corresponding to the bit is of a low priority. In this implementation, a priority of a measurement object for which the first information is not configured may be a low priority.

Implementation 2: The first measurement configuration includes at least one preset condition, one of the at least one preset condition corresponds to one of the M measurement objects, and the preset condition is a condition that a priority of the measurement object corresponding to the preset condition is a high priority. In this implementation, a priority of a measurement object for which the preset condition is not configured may be a low priority. For example, a preset condition corresponding to a measurement object is that when reference signal received power (reference signal received power, RSRP) of a serving cell is less than or equal to a preset threshold, a priority of the measurement object is a high priority. Alternatively, the RSRP may be replaced with another parameter used to represent signal quality. This is not limited in this application.

The plurality of measurement objects may alternatively correspond to a same preset condition. To be specific, when the preset condition is met, the plurality of measurement objects corresponding to the preset condition are all of a high priority; and when the preset condition is not met, the plurality of measurement objects corresponding to the preset condition are all of a low priority.

When the priority of the measurement object is configured, either of Implementation 1 or Implementation 2 may be used, or Implementation 1 and Implementation 2 may be used together. For example, the first information may be configured for some of the M measurement objects, and the preset condition may be configured for the other some of the M measurement objects. This is not limited in this application.

In this application, the priority of the measurement object may be implemented in a plurality of manners. For example, in Implementation 1, priorities may include only two levels: the high priority and the low priority. When configuring priorities of measurement objects, a network side configures a priority of an important measurement object as the high priority, and configures a priority of an unimportant measurement object as the low priority. For example, a priority of a measurement object used for handover may be configured as the high priority, and a priority of a measurement object used for load balancing or secondary cell management may be configured as the low priority. The "high priority" may alternatively be replaced with a description like "important", and the "low priority" may alternatively be replaced with a description like "unimportant".

In this implementation, if that a priority of a measurement object is the high priority is described, it may mean that the priority of the measurement object is configured as the high priority. If that a priority of a measurement object is the low priority is described, it may mean that the priority of the measurement object is configured as the low priority.

Implementation 2: The priority may include a plurality of levels, a priority of each level corresponds to one index, and a larger index indicates a higher priority. For example, if an index of a priority of a measurement object 1 is 2 and an index of a priority of a measurement object 2 is 5, the priority of the measurement object 2 is higher than the priority of the measurement object 1.

When configuring priorities of measurement objects, a network side configures an index of an important measurement object to a large value, and configures an index of an unimportant measurement object to a small value. For example, an index of a priority of a measurement object used for handover may be configured to a large value, and an index of a priority of a measurement object used for load balancing or secondary cell management may be configured to a small value.

The foregoing is merely an example, and the priority may be alternatively implemented in another manner. This is not limited in this application.

In this implementation, if a priority of a measurement object is described as a high priority, it may mean that an index corresponding to the priority of the measurement object is greater than or equal to a preset index. If a priority of a measurement object is described as a low priority, it may mean that an index corresponding to the priority of the measurement object is less than the preset index. The preset index is preconfigured, predefined, or configured by the network.

In the following description of this application, if a priority of a measurement object is described as a high priority or a low priority, for a specific meaning of the high priority or the low priority, refer to descriptions in any one of the foregoing implementations.

Optionally, step 302: The terminal device sends first indication information to the first network device.

Correspondingly, the first network device receives the first indication information from the terminal device.

In this application, the first indication information is information related to one or more measurement objects, and a resource used by the terminal device to measure the one or more measurement objects conflicts with a resource used in a second network.

The terminal device indicates, to the first network based on the first indication information, a measurement object that cannot be normally measured by the terminal device. The first network may determine that measurement reporting is absent for the corresponding measurement object because the terminal device cannot perform measurement, instead of because the terminal device does not find a cell for the measurement object. In this way, the first network may configure the terminal device to measure another measurement object that can be normally measured, to ensure mobility of the terminal device.

The one or more measurement objects may be measurement objects that are configured in the first network based on the first measurement configuration, or may be measurement objects that are not configured in the first network but that can be measured by the terminal device.

That there is a resource conflict may mean that the resource used by the terminal device to measure the one or more measurement objects is the same as or overlaps the resource used by the terminal device in the second network. Consequently, the terminal device cannot simultaneously measure the measurement object and perform communication in the second network. The "resources" includes resources such as a baseband resource and a radio frequency resource. For details, refer to the foregoing descriptions. Details are not described herein again.

How the first indication information is specifically implemented is not limited in this application. In an implementation, the first indication information includes one or more measurement object identifiers, and the one or more measurement object identifiers one-to-one correspond to the one or more measurement objects indicated by the first indication information. In this implementation, the first indication information may be a measurement object identifier list, and the measurement object identifier list includes the identifiers of the one or more measurement objects.

In an implementation, the first indication information includes a band identifier of at least one band, and the one or more measurement objects indicated by the first indication information are measurement objects in the at least one band. In this implementation, the first indication information may be the band identifier list, and the band identifier list includes an identifier of the at least one band. For example, if the first indication information includes the band (band) A, the one or more measurement objects are measurement objects whose measurement frequencies are in the band A.

In an implementation, the first indication information includes a cell identifier of at least one serving cell, and the one or more measurement objects indicated by the first indication information are measurement objects corresponding to the at least one serving cell. In this implementation, the first indication information may be a cell identifier list, and the cell identifier list includes an identifier of the at least one serving cell. For example, if the first indication information includes a serving cell k, the one or more measurement objects are measurement objects indicated by a serving cell measurement object (servingCellMO) configuration of the serving cell k, or measurement objects whose measurement frequencies are the same as a measurement frequency of a measurement reference signal of the serving cell k.

How the terminal device specifically sends the first indication information is not limited in this application. For example, the terminal device may send the first indication information through RRC signaling, a MAC control element (control element, CE), layer 1 (layer 1, L1) signaling, or layer 2 (layer 2, L2) signaling, or may send the first indication information through another type of message. This is not limited in this application.

In this application, how the terminal device determines the one or more measurement objects indicated by the first indication information is not limited. In an implementation, if a network state of the terminal device in the second network changes, the resource used by the terminal device in the second network also changes. In this case, the terminal device may compare the resource used in the second network with a resource used to perform measurement in the first network, to determine the one or more measurement objects for which the resource that is used when measurement is performed and that conflicts with the resource used in the second network.

That the network state of the terminal device in the second network changes includes but is not limited to at least one of the following cases: The terminal device enters a connected mode from an idle mode or an inactive mode in the second network, the terminal device enters the idle mode or the inactive mode from the connected mode in the second network, the terminal device adds a secondary cell to or deletes a secondary cell from the second network, the terminal device performs an inter-frequency handover in the second network, and the like.

If a source cell on which the handover is performed and a target cell have a same synchronous signal/ physical broadcast channel block (synchronous signal/ physical broadcast channel block, SSB) frequency, it is an intra-frequency handover. If the source cell on which the handover is performed and the target cell have different SSB frequencies, it is the inter-frequency handover.

A sequence of step 301 and step 302 is not limited. Step 301 may be performed before step 302, or step 302 may be performed before step 301.

If step 302 is performed before step 301, the M measurement objects indicated by the first measurement configuration may not include the one or more measurement objects indicated by the first indication information, or when the M measurement objects include any one of the one or more measurement objects indicated by the first indication information, a priority of the measurement object is the high priority.

If step 301 is performed before step 302, step 303 may be further included.

Optionally, step 303: The first network device sends a second measurement configuration to the terminal device.

Correspondingly, the terminal device receives the second measurement configuration from the first network device.

The second measurement configuration indicates that N measurement objects are measured, and N is an integer greater than or equal to 0.

In an implementation, the second measurement configuration further indicates a priority of each of the N measurement objects. For details, refer to descriptions about the priority in the first measurement configuration. Details are not described herein again.

In an implementation, the second measurement configuration may be a configuration obtained by updating the first measurement configuration.

In an implementation, the N measurement objects do not include a measurement object that meets the following conditions: a measurement object in the M measurement objects, a measurement object whose priority is a low priority, and a measurement object in the one or more measurement objects indicated by the first indication information.

This implementation may be understood as follows: The network device deletes, based on the first indication information, a measurement object, in configured measurement objects, that cannot be normally measured by the terminal device and that is of a low priority. The network device and the terminal device may align a configuration of the measurement object, to consistently learn whether the terminal device measures the measurement object.

In an implementation, if the first indication information is a cell identifier of a serving cell, the serving cell is a primary secondary cell (Primary SCell, PSCell), and the second measurement configuration does not include a radio link monitoring (Radio Link Monitoring, RLM) configuration or a beam failure detection (Beam Failure Detection, BFD) configuration of the primary secondary cell, the second measurement configuration may be included in an activation/deactivation command of the primary secondary cell. The network device and the terminal device may configure RLM and BFD for the primary secondary cell, to consistently learn whether the terminal device performs RLM/BFD measurement on the primary secondary cell.

In an implementation, the N measurement objects include any one of the one or more measurement objects indicated by the first indication information, and a priority of the measurement object is a high priority. This implementation may be understood as follows: For the network device, based on the first indication information, reserved or added measurement objects may include a measurement object that cannot be normally measured by the terminal device and that is of a high priority. The network device and the terminal device may align a configuration of the measurement object, to consistently learn whether the terminal device measures the measurement object.

In an implementation, a measurement object in the N measurement objects may meet any one of the following conditions: a resource used to measure the measurement object does not conflict with the resource used in the second network; or a resource used to measure the measurement object conflicts with the resource used in the second network, but a priority of the measurement object is a high priority. For example, the N measurement objects may include a measurement object in the one or more measurement objects indicated by the first indication information, but a priority of the measurement object is a high priority.

In an implementation, the N measurement objects may not include the first measurement object. In this implementation, the first measurement object is a measurement object in the one or more measurement objects indicated by the first indication information, and the first measurement object is not a measurement object in the M measurement objects. Alternatively, the first measurement object is a measurement object in the one or more measurement objects indicated by the first indication information. Alternatively, the first measurement object is a measurement object in the M measurement objects. This implementation may be understood as follows: For the network device, based on the first indication information, added measurement objects do not include a measurement object that cannot be normally measured by the terminal device. The network device and the terminal device may align a configuration of the measurement object, to consistently learn whether the terminal device measures the measurement object.

In an implementation, the N measurement objects may not include the first measurement object. In this implementation, the first measurement object is a measurement object in the one or more measurement objects indicated by the first indication information, the first measurement object is not a measurement object in the M measurement objects, and a priority of the first measurement object is a low priority. Alternatively, the first measurement object is a measurement object in the one or more measurement objects indicated by the first indication information, and a priority of the first measurement object is a low priority. Alternatively, the first measurement object is a measurement object in the M measurement objects, and a priority of the first measurement object is a low priority. This implementation may be understood as follows: For the network device, based on the first indication information, added measurement objects do not include a measurement object that cannot be normally measured by the terminal device and that is of a low priority. The network device and the terminal device may align a configuration of the measurement object, to consistently learn whether the terminal device measures the measurement object.

In an implementation, if the N measurement objects include the first measurement object, or the N measurement objects include the first measurement object and the priority of the first measurement object is the low priority, the terminal device may send second indication information to the first network device. The second indication information indicates that a measurement configuration for the first measurement object fails. After receiving the second indication information, the first network device may reconfigure the priority of the first measurement object to a high priority, or may no longer expect to obtain a measurement result of the first measurement object. For a meaning of the first measurement object, refer to any one of the foregoing descriptions.

According to the foregoing method, the first network releases a measurement object that cannot be measured or avoids configuring a measurement object that cannot be measured, and aligns network behavior of the first network and the terminal device.

Step 304: When a resource used by the terminal device to measure at least one of the M measurement objects conflicts with the resource used in the second network, cancel the measurement on the at least one measurement object.

Canceling the measurement on the at least one measurement object may be replaced with a similar description like "stopping the measurement on the at least one measurement object".

In an implementation, the at least one measurement object on which the terminal device cancels measurement includes a measurement object that conflicts with the resource used in the second network and whose priority is a low priority in the M measurement objects, or includes all measurement objects that conflict with the resource used in the second network and whose priorities are low priorities in the M measurement objects. In this implementation, the terminal device autonomously cancels measurement on a measurement object that has been configured but has a resource conflict or a measurement object that has a resource conflict and that is of a low priority, thereby avoiding a delay in sending the second measurement configuration by the network device and applying the second measurement configuration by the terminal device, and equivalently reducing a delay in a status change of the terminal in the second network. In other words, the status change of the terminal device in the second network does not need to wait for a measurement reconfiguration of the first network.

In an implementation, after the terminal device receives the second measurement configuration, the at least one measurement object on which the terminal device cancels the measurement includes a measurement object that meets the following condition: a measurement object that in the M measurement objects and that is not in the N measurement objects. In this implementation, with reference to step 303, the network device deletes a measurement object that has the resource conflict (or has the resource conflict and is of a low priority) from configured measurement objects, to avoid configuring the measurement object that has the resource conflict (or has the resource conflict and is of the low priority). The network device and the terminal device may align a configuration of the measurement object, to consistently learn whether the terminal device measures the measurement object.

In this application, before measuring the measurement object, the terminal device may further perform the following procedure.

Optionally, step 305: The terminal device sends third indication information to a second network device in the second network.

In an implementation, the third indication information indicates time information of a link interruption between the terminal device and the second network device. The time information may indicate at least one of the following: duration of the link interruption; a time location of the link interruption, where the time location may be understood as including a start (or beginning) moment of the link interruption and/or an end moment of the link interruption; and a period of the link interruption, where the period may be understood as duration between two adjacent link interruptions.

In this implementation, the terminal device applies for the time information of the link interruption (equivalent to a multi-SIM gap (gap)) based on the third indication information, and the terminal device measures a second measurement object within time corresponding to the time information.

In an implementation, the third indication information indicates that a measurement object in the first network is to be measured. A time location and a time length for measuring the second measurement object by the terminal device may not be indicated to the second network device. The terminal device may generate an autonomous (autonomous) gap to measure the second measurement object.

In an implementation, the third indication information further indicates information about a serving cell corresponding to the link interruption, for example, indicates an identifier of the serving cell corresponding to link interruption.

Optionally, step 306: The terminal device measures the second measurement object.

In an implementation, the terminal device measures a measurement object that has the resource conflict and whose priority is of a high priority in the M measurement objects. In other words, the second measurement object is the measurement object that has the resource conflict and whose priority is of the high priority in the M measurement objects.

In this implementation, the terminal device measures the second measurement object within the time corresponding to the time information indicated by the third indication information. Alternatively, if the third indication information does not indicate the time information of the link interruption, the terminal device may generate the autonomous (autonomous) gap, and measure the second measurement object within the autonomous gap.

In an implementation, the terminal device may alternatively measure a measurement object that does not have the resource conflict in the M measurement objects. In other words, the second measurement object may alternatively be the measurement object that does not have the resource conflict and whose priority is of the high priority in the M measurement objects.

"Have a conflict" may mean that a resource used by the terminal device to measure a measurement object conflicts with the resource used by the terminal device in the second network. "Does not have a conflict" may mean that a resource used by the terminal device to measure a measurement object does not conflict with the resource used by the terminal device in the second network.

In an implementation, the terminal device measures a measurement object that has the resource conflict in the N measurement objects. In other words, the second measurement object is the measurement object that has the resource conflict in the N measurement objects. With reference to step 303, the N measurement objects configured by the network device may include a measurement object that has the resource conflict and that is of a high priority, but do not include a measurement object that has the resource conflict and that is of a low priority. In this implementation, the terminal device may alternatively measure a measurement object that does not have the resource conflict in the N measurement objects. In other words, the second measurement object may alternatively be the measurement object that does not have the resource conflict in the N measurement objects.

A specific quantity of measurement objects measured by the terminal device is not limited. The terminal device may measure all high-priority measurement objects in the M measurement objects or all measurement objects in the N measurement objects.

According to the method provided in this application, when the first network indicates, to the terminal device, the M measurement objects that need to be measured, a priority may be configured for each measurement object. When the network state of the terminal device in the second network changes, these measurement object configurations cannot be normally measured. The terminal device may determine, based on the priority of each measurement object, measurement objects to be measured, to ensure the mobility of the terminal device in the first network. The network device may configure a high priority for a measurement object to ensure that the terminal device still measures the measurement object even if there is the resource conflict.

In this application, when determining that a resource used to measure the measurement object conflicts with the resource used in the second network, the terminal device may further update the no-gap measurement capability of the measurement object. For details, refer to the following procedure.

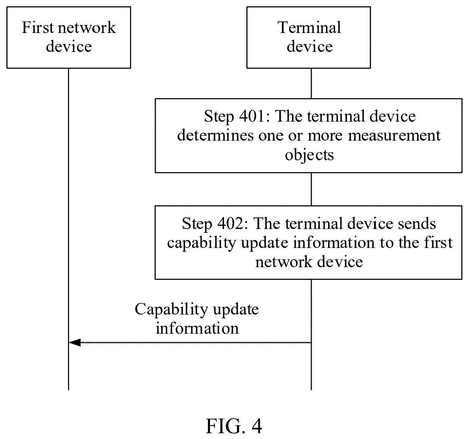

FIG. 4 is a schematic flowchart of a measurement method according to an embodiment of this application.

Step 401: A terminal device determines one or more measurement objects.

A resource used by the terminal device to measure the one or more measurement objects conflicts with a resource used in a second network.

The one or more measurement objects may be measurement objects in a first network.

That there is a resource conflict may mean that the resource used by the terminal device to measure the one or more measurement objects partially or completely overlaps the resource used by the terminal device in the second network. Consequently, the terminal device cannot simultaneously measure the measurement object and perform communication in the second network.

In an implementation, if a network state of the terminal device in the second network changes, the resource used by the terminal device in the second network also changes. In this case, the terminal device may compare the resource used in the second network with a resource used to perform measurement in the first network, to determine the one or more measurement objects for which the resource that is used when measurement is performed and that conflicts with the resource used in the second network.

That the network state of the terminal device in the second network changes includes but is not limited to at least one of the following cases: The terminal device enters a connected mode from an idle mode or an inactive mode in the second network, the terminal device enters the idle mode or the inactive mode from the connected mode in the second network, the terminal device adds a secondary cell to or deletes a secondary cell from the second network, the terminal device performs an inter-frequency handover in the second network, and the like.

That the status of the terminal device in the second network changes may cause a measurement capability of the terminal device in the first network to change. For example, when the second network is in the idle state, the terminal device may measure a measurement object of a first network based on an idle radio frequency resource, without interrupting a serving cell of the first network during the measurement. In other words, the terminal device may perform no-gap measurement on the measurement object. The terminal device may interrupt the serving cell before and after measurement time. Therefore, a network controlled small gap (network controlled small gap, NCSG) needs to be configured in the first network. In this application, whether an interruption occurs before and after the terminal device performs no-gap measurement is not limited. When the second network is entering the connected mode, an idle radio frequency resource may be occupied by a serving cell of the second network. Consequently, the terminal device can measure the measurement object only based on a radio frequency resource of the serving cell of the first network. In this case, the terminal device may interrupt the serving cell of the first network during the measurement, that is, the terminal device cannot perform no-gap measurement on the measurement object.

Step 402: The terminal device sends capability update information to the first network device.

The capability update information is used to update no-gap measurement capabilities of X measurement objects, where X is an integer greater than 0. A no-gap measurement capability of a measurement object may indicate whether a measurement gap parameter needs to be configured for the measurement object.

For example, a no-gap measurement capability of one of the X measurement objects is updated from a capability in which the measurement gap parameter does not need to be configured to a capability in which the measurement gap parameter needs to be configured. In this case, the no-gap measurement capability of the measurement object may indicate that the measurement gap parameter needs to be configured for the measurement object.

In an implementation, the X measurement objects may include a measurement object in the one or more measurement objects.

In this application, the capability update information may also be referred to as a name like need for gap configuration NR (NeedForGapsConfigNR) or need for gap NCSG configuration NR/EUTRA (NeedForGapNCSG-ConfigNR/EUTRA). EUTRA represents evolved universal terrestrial radio access (evolved universal terrestrial radio access).

The terminal device may send the capability update information to the first network device based on UE assistance information (UE assistance information, UAI), or may send the capability update information in another manner.

According to the method in this embodiment of this application, the network device may update a measurement configuration or perform a new measurement configuration based on an updated no-gap measurement capability. For example, if a no-gap measurement capability corresponding to a configured measurement object changes from no-gap ('no-gap') to gap ('gap'), the network device may configure a measurement gap to ensure that the terminal device can measure the measurement object, thereby ensuring mobility of the terminal device in a network.

In this application, when determining that the resource used to measure the measurement object conflicts with the resource used in the second network, the terminal device may further determine, based on whether the serving cell can be handed over to a primary cell, whether to measure a measurement object in the serving cell. For details, refer to the following procedure.

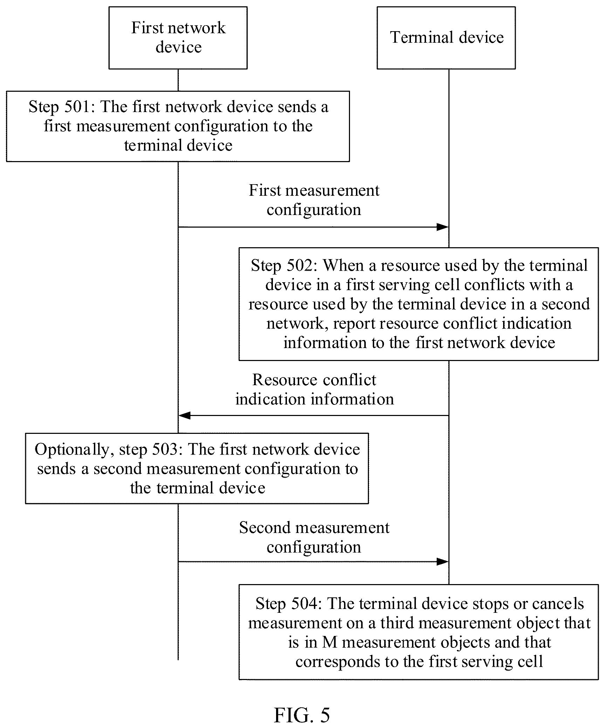

FIG. 5 is a schematic flowchart of a measurement method according to an embodiment of this application.

Step 501: A first network device sends a first measurement configuration to a terminal device.

Correspondingly, the terminal device receives the first measurement configuration from the first network device.

The first network device is located in a first network. The first measurement configuration indicates to measure the M measurement objects, and M is an integer greater than 0. The first measurement configuration may further indicates a priority of each of the M measurement objects.

For specific descriptions of step 501, refer to the descriptions in step 301. Details are not described herein again.

Step 502: When a resource used by the terminal device in a first serving cell conflicts with a resource used by the terminal device in a second network, report resource conflict indication information to the first network device.

The resource conflict indication information indicates that the first serving cell has the resource conflict. For example, the resource conflict indication information is a serving cell deactivation request, a serving cell deletion request, or the like. A form of the resource conflict indication is not limited in this application.

According to the foregoing method, the terminal device reports the resource conflict indication information, and the first network device may determine that measurement reporting is absent for the measurement object because the terminal device cannot perform measurement, instead of because no cell is monitored on a target frequency. In addition, the first network device may release a measurement object that cannot be measured by the terminal device or avoid configuring a measurement object that cannot be measured, so that the network and the terminal device align an understanding.

Optionally, step 503: The first network device sends a second measurement configuration to the terminal device.

In the second measurement configuration, the network device deletes a measurement object corresponding to the first serving cell, or deletes a measurement object corresponding to the first serving cell when a first condition is met. In an implementation, the first condition includes at least one of the following: The first serving cell cannot be used for handover to a primary cell; and
the first serving cell can be used for the handover to the primary cell, and a priority of a third measurement object is a low priority.

In an implementation, the terminal device may further indicate, to the first network device, whether the first serving cell can be used for the handover to the primary cell.

In an implementation, if the first serving cell is a primary secondary cell (Primary SCell, PSCell), and the second measurement configuration does not include a radio link monitoring (Radio Link Monitoring, RLM) configuration or a beam failure detection (Beam Failure Detection, BFD) configuration of the primary secondary cell, the second measurement configuration may be included in an activation/deactivation command of the primary secondary cell. The network device and the terminal device may configure RLM and BFD for the primary secondary cell, to consistently learn whether the terminal device performs RLM/BFD measurement on the primary secondary cell.

Step 504: The terminal device stops or cancels measurement on the third measurement object that is in the M measurement objects and that corresponds to the first serving cell.

In an implementation, when the first condition is met, the terminal device stops or cancels the measurement on the third measurement object that is in the M measurement objects and that corresponds to the first serving cell.

In an implementation, the first condition includes at least one of the following: The first serving cell cannot be used for the handover to the primary cell; and
the first serving cell can be used for the handover to the primary cell, and the priority of the third measurement object is a low priority.

In an implementation, the terminal device may further indicate, to the first network device, whether the first serving cell can be used for the handover to the primary cell.

In an implementation, if the first serving cell is the primary secondary cell and RLM/BFD is configured for the cell, the terminal device stops RLM/BFD in the cell.

In an implementation, the terminal device receives the second measurement configuration, and at least one measurement object that the terminal device cancels measurement includes a measurement object that meets the following condition.

In this application, there may be a plurality of implementations for how the terminal device specifically stops or cancels the measurement on the third measurement object. In an implementation, the terminal device receives a resource release command for the first serving cell from the first network device, and stops or cancels the measurement on the third measurement object.

In an implementation, if the terminal device does not receive the resource release command but a timer preconfigured in the terminal device expires, the terminal device stops or cancels the measurement on the third measurement object.

The terminal device may start the timer when determining that there is the resource conflict, or when a network state of the second network changes, or when providing an indication for the first network. Timing duration of the timer is predefined, preconfigured, or configured by the network, or may be autonomously set by the terminal device.

In an implementation, when a second condition is met, the terminal device may measure the third measurement object.

The second condition includes: The first serving cell can be used for the handover to the primary cell, and the priority of the third measurement object is a high priority.

In an implementation, if the terminal device measures the third measurement object, the terminal device may further send third indication information to a second network device in the second network. The third indication information indicates time information of a link interruption between the terminal device and the second network device, and the terminal device measures a second measurement object within time corresponding to the time information; or the third indication information indicates that a measurement object in the first network is to be measured by the terminal device.

For specific content of the third indication information, refer to the description of the third indication information in step 306. Details are not described herein again.

According to the method provided above, when the terminal device cannot measure measurement objects corresponding to the first serving cell configured by the first network, and the first serving cell cannot be used for the handover to the primary cell, the terminal device may cancel measurement on these measurement objects, thereby avoiding impact on the second network during the measurement. Further, if the first serving cell can be used for the handover to the primary cell, the terminal device still measures these measurement objects, to ensure mobility of the terminal device in the first network.

The foregoing method procedures may be independently implemented, or may be implemented in combination. This is not limited in this application.

In the foregoing embodiments provided in this application, the method provided in embodiments of this application is described from a perspective of interaction between devices. To implement functions in the method provided in embodiments of this application, the network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software function module.

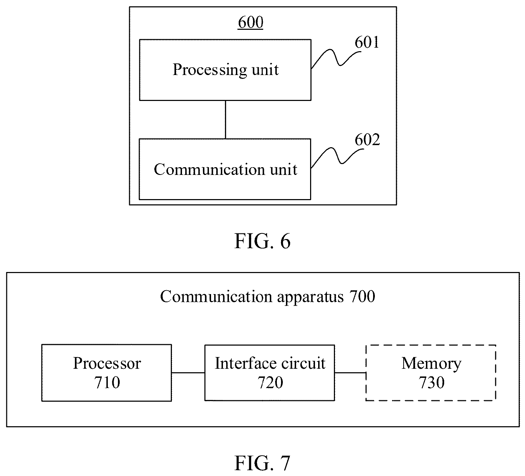

Same as the foregoing concept, as shown in FIG. 6, an embodiment of this application further provides a communication apparatus 600, configured to implement a function of the network device or the terminal device in the foregoing methods. For example, the apparatus may be a software module or a chip system. In this embodiment of this application, the chip system may include a chip, or may include a chip and another discrete component. The communication apparatus 600 may include a processing unit 601 and a communication unit 602.

In embodiments of this application, the processing unit may also be referred to as a processor, a processing board, a processing module, a processing apparatus, or the like. The communication unit may also be referred to as a transceiver, a transceiver machine, a transceiver apparatus, a transceiver unit, or the like. The transceiver unit may include a sending unit and/or a receiving unit, configured to perform sending and receiving steps of the network device or the terminal device in the foregoing method embodiments.

The following describes in detail a communication apparatus provided in embodiments of this application with reference to FIG. 6 and FIG. 7. It should be understood that description of apparatus embodiments corresponds to the description of the method embodiments. Therefore, for content that is not described in detail, refer to the foregoing method embodiments. For brevity, details are not described herein again.

In an implementation, the communication apparatus 600 may perform the following functions.

A communication unit is configured to receive a first measurement configuration from a first network device in a first network. The first measurement configuration indicates to measure the M measurement objects, and M is an integer greater than 0.

A processing unit is configured to cancel measurement on at least one of the M measurement objects. A resource used to measure the at least one measurement object conflicts with a resource used in a second network.

In an implementation, the communication apparatus 600 may perform the following functions.

A communication unit is configured to receive first indication information from a terminal device. The first indication information is information related to one or more measurement objects, and a resource used by the terminal device to measure the one or more measurement objects conflicts with a resource used by the terminal device in a second network.

A processing unit is configured to determine a second measurement configuration based on the first indication information.

The communication unit is configured to send the second measurement configuration to the terminal device. The second measurement configuration indicates that N measurement objects are measured, N is an integer greater than 0, and measurement objects whose priorities are low priorities in the N measurement objects do not include a measurement object that meets the following condition: a measurement object in the one or more measurement objects.

In an implementation, the communication apparatus 600 may perform the following functions.

A communication unit is configured to receive a first measurement configuration from a first network device in a first network. The first measurement configuration indicates to measure the M measurement objects, and M is an integer greater than 0.

A processing unit is configured to: if a resource used in a first serving cell conflicts with a resource used in a second network, when a first condition is met, cancel measurement on a third measurement object that is in the M measurement objects and that corresponds to the first serving cell. The first condition includes: The first serving cell cannot be used for handover to a primary cell.

The foregoing descriptions are merely examples. The processing unit 601 and the communication unit 602 may further perform other functions. For more detailed descriptions, refer to the related descriptions in the foregoing method embodiments. Details are not described herein again.

FIG. 7 shows a communication apparatus 700 according to an embodiment of this application. The apparatus shown in FIG. 7 may be an implementation of a hardware circuit of the apparatus shown in FIG. 6. The communication apparatus is applicable to the foregoing flowcharts, and performs functions of the network device or the terminal device in the foregoing method embodiments. For ease of description, FIG. 7 shows only main components of the communication apparatus.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface.

Optionally, in an implementation, the communication apparatus 700 may further include a memory 730, configured to: store instructions executed by the processor 710, store input data required for running instructions by the processor 710, or store data generated after the processor 710 runs instructions.

When the communication apparatus 700 is configured to implement the foregoing method, the processor 710 is configured to implement a function of the processing unit 601, and the interface circuit 720 is configured to implement a function of the communication unit 602.

It should be understood that the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium or write information into the storage medium. Certainly, the storage medium may be a component of the processor. The processor and the storage medium may be disposed in an ASIC.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

The computer program instructions may be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of the claims of this application and their equivalent technologies.

## Claims

1. A measurement method, comprising:
determining one or more measurement objects; and
sending the capability update information to a first network device in a first network, wherein the capability update information is used to update no-gap measurement capabilities of X measurement objects, the X measurement objects comprise a measurement object in the one or more measurement objects, and X is an integer greater than 0.

2. The method according to claim 1, wherein the no-gap measurement capabilities of the X measurement objects are no-gap measurement capabilities of bands in which the X measurement objects are located or serving cells corresponding to the X measurement objects.

3. The method according to claim 1 or 2, wherein a no-gap measurement capability of one measurement object indicates whether a measurement gap parameter needs to be configured for the measurement object.

4. The method according to any one of claims 1 to 3, wherein a resource used to measure the measurement object in the first network conflicts with a resource used in a second network.

5. The method according to any one of claims 1 to 4, wherein the capability update information is carried in user equipment UE assistance information.

6. The method according to any one of claims 1 to 5, wherein the capability update information is need for gap configuration new radio NR, or the capability update information is need for gap network controlled small gap NCSG configuration NR/evolved universal terrestrial radio access EUTRA.

7. The method according to any one of claims 1 to 6, wherein the one or more measurement objects are measurement objects in the first network.

8. A measurement method, comprising:
receiving capability update information from a terminal device, wherein the capability update information is used to update no-gap measurement capabilities of X measurement objects, the X measurement objects comprise measurement objects in one or more measurement objects in a first network, and X is an integer greater than 0; and
updating, based on the capability update information, measurement configurations corresponding to the X measurement objects, or configuring new measurement configurations for the X measurement objects based on the capability update information.

9. The method according to claim 8, wherein the no-gap measurement capabilities of the X measurement objects are no-gap measurement capabilities of bands in which the X measurement objects are located or serving cells corresponding to the X measurement objects.

10. The method according to claim 8 or 9, wherein a no-gap measurement capability of one measurement object indicates whether a measurement gap parameter needs to be configured for the measurement object.

11. The method according to any one of claims 8 to 10, wherein a resource used to measure the measurement object in the first network conflicts with a resource used in a second network.

12. The method according to any one of claims 8 to 11, wherein the capability update information is carried in user equipment UE assistance information.

13. The method according to any one of claims 8 to 12, wherein the capability update information is need for gap configuration new radio NR, or the capability update information is need for gap network controlled small gap NCSG configuration NR/evolved universal terrestrial radio access EUTRA.

14. A measurement method, comprising:
receiving a first measurement configuration from a first network device in a first network, wherein the first measurement configuration indicates to measure the M measurement objects, and M is an integer greater than 0; and
canceling measurement on at least one of the M measurement objects, wherein a resource used to measure the at least one measurement object conflicts with a resource used in a second network.

15. The method according to claim 14, wherein the first measurement configuration further indicates a priority of each of the M measurement objects.

16. The method according to claim 14 or 15, wherein the method further comprises: sending first indication information to the first network device, wherein the first indication information is information related to one or more measurement objects, and a resource used to measure the one or more measurement objects conflicts with the resource used in the second network.

17. The method according to claim 16, wherein the first indication information comprises one or more measurement object identifiers, and the one or more measurement object identifiers one-to-one correspond to the one or more measurement objects; or
the first indication information comprises a band identifier of at least one band, and the one or more measurement objects are measurement objects in the at least one band; or
the first indication information comprises a cell identifier of at least one serving cell, and the one or more measurement objects are measurement objects corresponding to the at least one serving cell.

18. The method according to claim 15, wherein the at least one measurement object is a measurement object whose priority is a low priority in the M measurement objects.

19. The method according to claim 17 or 18, wherein the method further comprises:
receiving a second measurement configuration from the first network device, wherein the second measurement configuration indicates that N measurement objects are measured, N is an integer greater than or equal to 0, and the second measurement configuration is a configuration obtained by updating the first measurement configuration.

20. The method according to claim 19, wherein the N measurement objects do not comprise a first measurement object, and the first measurement object is a measurement object in the one or more measurement objects, and is not a measurement object in the M measurement objects.

21. The method according to claim 19, wherein the method further comprises:
if the N measurement objects comprise a first measurement object, sending second indication information to the first network device, wherein the second indication information indicates that a measurement configuration for the first measurement object fails, and the first measurement object is a measurement object in the one or more measurement objects, and is not a measurement object in the M measurement objects.

22. The method according to claim 20 or 21, wherein the second measurement configuration further indicates a priority of each of the N measurement objects, and the first measurement object is the measurement object in the one or more measurement objects, is not the measurement object in the M measurement objects, and is of a low priority.

23. The method according to claim 15 or 22, wherein the method further comprises:
measuring a second measurement object, wherein the second measurement object is a measurement object with a high priority in the M measurement objects or the N measurement objects, and a resource used to measure the second measurement object conflicts with the resource used in the second network.

24. The method according to claim 23, wherein the method further comprises:
sending third indication information to a second network device in the second network, wherein the third indication information indicates time information of a link interruption between a terminal device and the second network device, and the terminal device measures the second measurement object within time corresponding to the time information; or the third indication information indicates that a measurement object in the first network is to be measured.

25. The method according to claim 15, wherein that the first measurement configuration further indicates the priority of each of the M measurement objects comprises:
the first measurement configuration comprises M pieces of first information, one of the M pieces of first information corresponds to one of the M measurement objects, and the first information indicates a priority marker of a measurement object corresponding to the first information; or
the first measurement configuration comprises at least one preset condition, one of the at least one preset condition corresponds to one of the M measurement objects, and the preset condition is a condition that a priority of the measurement object corresponding to the preset condition is a high priority.

26. A measurement method, comprising:
receiving first indication information from a terminal device, wherein the first indication information is information related to one or more measurement objects, and a resource used by the terminal device to measure the one or more measurement objects conflicts with a resource used by the terminal device in a second network; and
sending a second measurement configuration to the terminal device, wherein the second measurement configuration indicates that N measurement objects are measured, N is an integer greater than 0, and the N measurement objects do not comprise a measurement object that meets the following condition:
a measurement object in the one or more measurement objects.

27. The method according to claim 26, wherein the first indication information comprises one or more measurement object identifiers, and the one or more measurement object identifiers one-to-one correspond to the one or more measurement objects; or
the first indication information comprises a band identifier of at least one band, and the one or more measurement objects are measurement objects in the at least one band; or
the first indication information comprises a cell identifier of at least one serving cell, and the one or more measurement objects are measurement objects corresponding to the at least one serving cell.

28. The method according to claim 26 or 27, wherein the second measurement configuration further indicates a priority of each of the N measurement objects, and measurement objects whose priorities are low priorities in the N measurement objects do not comprise a measurement object that meets the following condition:
a measurement object in the one or more measurement objects.

29. The method according to claim 28, wherein that the second measurement configuration further indicates the priority of each of the N measurement objects comprises:
the first measurement configuration comprises N pieces of first information, one of the N pieces of first information corresponds to one of the N measurement objects, and the first information indicates a priority marker of a measurement object corresponding to the first information; or
the first measurement configuration comprises at least one preset condition, one of the at least one preset condition corresponds to one of the N measurement objects, and the preset condition is a condition that a priority of the measurement object corresponding to the preset condition is a high priority.

30. A measurement method, comprising:
receiving a first measurement configuration from a first network device in a first network, wherein the first measurement configuration indicates to measure the M measurement objects, and M is an integer greater than 0; and
if a resource used in a first serving cell conflicts with a resource used in a second network, when a first condition is met, canceling measurement on a third measurement object that is in the M measurement objects and that corresponds to the first serving cell, wherein
the first condition comprises: the first serving cell is not capable of being used for handover to a primary cell.

31. The method according to claim 30, wherein the stopping the measurement on the third measurement object that is in the M measurement objects and that corresponds to the first serving cell comprises:
receiving a resource release command for the first serving cell from the first network device, and stopping the measurement on the third measurement object; or
if the resource release command is not received but a preconfigured timer expires, stopping the measurement on the third measurement object.

32. The method according to claim 30 or 31, wherein the third measurement object is measured when a second condition is met; and
the second condition comprises: the first serving cell is capable of being used for the handover to the primary cell.

33. The method according to claim 32, wherein if the third measurement object is measured, the method further comprises:
sending third indication information to a second network device in the second network, wherein the third indication information indicates time information of a link interruption between a terminal device and the second network device, and the terminal device measures the second measurement object within time corresponding to the time information; or the third indication information indicates that a measurement object in the first network is to be measured by the terminal device.

34. The method according to claim 32, wherein the first measurement configuration further indicates a priority of each of the M measurement objects.

35. The method according to claim 34, wherein the second condition further comprises: a priority of the third measurement object is a high priority.

36. The method according to claim 34, wherein that the first measurement configuration further indicates the priority of each of the M measurement objects comprises:
the first measurement configuration comprises M pieces of first information, one of the M pieces of first information corresponds to one of the M measurement objects, and the first information indicates a priority marker of a measurement object corresponding to the first information; or
the first measurement configuration comprises at least one preset condition, one of the at least one preset condition corresponds to one of the M measurement objects, and the preset condition is a condition that a priority of the measurement object corresponding to the preset condition is a high priority.

37. A communication apparatus, comprising:
a processing unit, configured to determine one or more measurement objects; and
a communication unit, configured to send the capability update information to a first network device in a first network, wherein the capability update information is used to update no-gap measurement capabilities of X measurement objects, the X measurement objects comprise a measurement object in the one or more measurement objects, and X is an integer greater than 0.

38. The apparatus according to claim 37, wherein the no-gap measurement capabilities of the X measurement objects are no-gap measurement capabilities of bands in which the X measurement objects are located or serving cells corresponding to the X measurement objects.

39. The apparatus according to claim 37 or 38, wherein a no-gap measurement capability of one measurement object indicates whether a measurement gap parameter needs to be configured for the measurement object.

40. The apparatus according to any one of claims 37 to 39, wherein a resource used to measure the measurement object in the first network conflicts with a resource used in a second network.

41. The apparatus according to any one of claims 37 to 40, wherein the capability update information is carried in user equipment UE assistance information.

42. The apparatus according to any one of claims 37 to 41, wherein the capability update information is need for gap configuration new radio NR, or the capability update information is need for gap network controlled small gap NCSG configuration NR/evolved universal terrestrial radio access EUTRA.

43. The apparatus according to any one of claims 37 to 42, wherein the one or more measurement objects are measurement objects in the first network.

44. A communication apparatus, comprising:
a communication unit, configured to receive capability update information from a terminal device, wherein the capability update information is used to update no-gap measurement capabilities of X measurement objects, the X measurement objects comprise measurement objects in one or more measurement objects in a first network, and X is an integer greater than 0; and
a processing unit, configured to: update, based on the capability update information, measurement configurations corresponding to the X measurement objects, or configure new measurement configurations for the X measurement objects based on the capability update information.

45. The apparatus according to claim 44, wherein the no-gap measurement capabilities of the X measurement objects are no-gap measurement capabilities of bands in which the X measurement objects are located or serving cells corresponding to the X measurement objects.

46. The apparatus according to claim 44 or 45, wherein a no-gap measurement capability of one measurement object indicates whether a measurement gap parameter needs to be configured for the measurement object.

47. The apparatus according to any one of claims 44 to 46, wherein a resource used to measure the measurement object in the first network conflicts with a resource used in a second network.

48. The apparatus according to any one of claims 44 to 47, wherein the capability update information is carried in user equipment UE assistance information.

49. The apparatus according to any one of claims 44 to 48, wherein the capability update information is need for gap configuration new radio NR, or the capability update information is need for gap network controlled small gap NCSG configuration NR/evolved universal terrestrial radio access EUTRA.

50. A communication apparatus, comprising:
a communication unit, configured to receive a first measurement configuration from a first network device in a first network, wherein the first measurement configuration indicates to measure the M measurement objects, and M is an integer greater than 0; and
a processing unit, configured to cancel measurement on at least one of the M measurement objects, wherein a resource used to measure the at least one measurement object conflicts with a resource used in a second network.

51. The apparatus according to claim 50, wherein the first measurement configuration further indicates a priority of each of the M measurement objects.

52. The apparatus according to claim 50 or 51, wherein the communication unit is further configured to:
send first indication information to the first network device, wherein the first indication information is information related to one or more measurement objects, and a resource used to measure the one or more measurement objects conflicts with the resource used in the second network.

53. The apparatus according to claim 52, wherein the first indication information comprises one or more measurement object identifiers, and the one or more measurement object identifiers one-to-one correspond to the one or more measurement objects; or
the first indication information comprises a band identifier of at least one band, and the one or more measurement objects are measurement objects in the at least one band; or
the first indication information comprises a cell identifier of at least one serving cell, and the one or more measurement objects are measurement objects corresponding to the at least one serving cell.

54. The apparatus according to claim 51, wherein the at least one measurement object is a measurement object whose priority is a low priority in the M measurement objects.

55. The apparatus according to claim 53 or 54, wherein the communication unit is further configured to:
receive a second measurement configuration from the first network device, wherein the second measurement configuration indicates that N measurement objects are measured, N is an integer greater than or equal to 0, and the second measurement configuration is a configuration obtained by updating the first measurement configuration.

56. The apparatus according to claim 55, wherein the N measurement objects do not comprise a first measurement object, and the first measurement object is a measurement object in the one or more measurement objects, and is not a measurement object in the M measurement objects.

57. The apparatus according to claim 55, wherein the communication unit is further configured to:
if the N measurement objects comprise a first measurement object, send second indication information to the first network device, wherein the second indication information indicates that a measurement configuration for the first measurement object fails, and the first measurement object is a measurement object in the one or more measurement objects, and is not a measurement object in the M measurement objects.

58. The apparatus according to claim 56 or 57, wherein the second measurement configuration further indicates a priority of each of the N measurement objects, and the first measurement object is the measurement object in the one or more measurement objects, is not the measurement object in the M measurement objects, and is of a low priority.

59. The apparatus according to claim 51 or 58, wherein the processing unit is further configured to:
measure a second measurement object, wherein the second measurement object is a measurement object with a high priority in the M measurement objects or the N measurement objects, and a resource used to measure the second measurement object conflicts with the resource used in the second network.

60. The apparatus according to claim 59, wherein the communication unit is further configured to:
send third indication information to a second network device in the second network, wherein the third indication information indicates time information of a link interruption between a terminal device and the second network device, and the terminal device measures the second measurement object within time corresponding to the time information; or the third indication information indicates that a measurement object in the first network is to be measured.

61. The apparatus according to claim 51, wherein that the first measurement configuration further indicates the priority of each of the M measurement objects comprises:
the first measurement configuration comprises M pieces of first information, one of the M pieces of first information corresponds to one of the M measurement objects, and the first information indicates a priority marker of a measurement object corresponding to the first information; or
the first measurement configuration comprises at least one preset condition, one of the at least one preset condition corresponds to one of the M measurement objects, and the preset condition is a condition that a priority of the measurement object corresponding to the preset condition is a high priority.

62. A communication apparatus, comprising:
a communication unit, configured to receive first indication information from a terminal device, wherein the first indication information is information related to one or more measurement objects, and a resource used by the terminal device to measure the one or more measurement objects conflicts with a resource used by the terminal device in a second network; and
a processing unit, configured to determine a second measurement configuration based on the first indication information, wherein
the communication unit is configured to send the second measurement configuration to the terminal device, wherein the second measurement configuration indicates that N measurement objects are measured, N is an integer greater than 0, and measurement objects whose priorities are low priorities in the N measurement objects do not comprise a measurement object that meets the following condition: a measurement object in the one or more measurement objects.

63. The apparatus according to claim 62, wherein the first indication information comprises one or more measurement object identifiers, and the one or more measurement object identifiers one-to-one correspond to the one or more measurement objects; or
the first indication information comprises a band identifier of at least one band, and the one or more measurement objects are measurement objects in the at least one band; or
the first indication information comprises a cell identifier of at least one serving cell, and the one or more measurement objects are measurement objects corresponding to the at least one serving cell.

64. The apparatus according to claim 62 or 63, wherein the second measurement configuration further indicates a priority of each of the N measurement objects, and the measurement objects whose priorities are low priorities in the N measurement objects do not comprise a measurement object that meets the following condition:
a measurement object in the one or more measurement objects.

65. The apparatus according to claim 64, wherein that the second measurement configuration further indicates the priority of each of the N measurement objects comprises:
the first measurement configuration comprises N pieces of first information, one of the N pieces of first information corresponds to one of the N measurement objects, and the first information indicates a priority marker of a measurement object corresponding to the first information; or
the first measurement configuration comprises at least one preset condition, one of the at least one preset condition corresponds to one of the N measurement objects, and the preset condition is a condition that a priority of the measurement object corresponding to the preset condition is a high priority.

66. A communication apparatus, comprising:
a communication unit, configured to receive a first measurement configuration from a first network device in a first network, wherein the first measurement configuration indicates to measure the M measurement objects, and M is an integer greater than 0; and
a processing unit, configured to: if a resource used in the first serving cell conflicts with a resource used in a second network, when a first condition is met, cancel measurement on a third measurement object that is in the M measurement objects and that corresponds to the first serving cell, wherein
the first condition comprises: the first serving cell is not capable of being used for handover to a primary cell.

67. The apparatus according to claim 66, wherein the stopping the measurement on the third measurement object that is in the M measurement objects and that corresponds to the first serving cell comprises:
receiving a resource release command for the first serving cell from the first network device, and stopping the measurement on the third measurement object; or
if the resource release command is not received but a preconfigured timer expires, stopping the measurement on the third measurement object.

68. The apparatus according to claim 66 or 67, wherein the third measurement object is measured when a second condition is met; and
the second condition comprises: the first serving cell is capable of being used for the handover to the primary cell.

69. The apparatus according to claim 68, wherein if the third measurement object is measured, the communication unit is further configured to:
send third indication information to a second network device in the second network, wherein the third indication information indicates time information of a link interruption between a terminal device and the second network device, and the terminal device measures the second measurement object within time corresponding to the time information; or the third indication information indicates that a measurement object in the first network is to be measured by the terminal device.

70. The apparatus according to claim 68, wherein the first measurement configuration further indicates a priority of each of the M measurement objects.

71. The apparatus according to claim 70, wherein the second condition further comprises: a priority of the third measurement object is a high priority.

72. The apparatus according to claim 70, wherein that the first measurement configuration further indicates the priority of each of the M measurement objects comprises:
the first measurement configuration comprises M pieces of first information, one of the M pieces of first information corresponds to one of the M measurement objects, and the first information indicates a priority marker of a measurement object corresponding to the first information; or
the first measurement configuration comprises at least one preset condition, one of the at least one preset condition corresponds to one of the M measurement objects, and the preset condition is a condition that a priority of the measurement object corresponding to the preset condition is a high priority.

73. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 36 by using a logic circuit or by executing code instructions.

74. A computer program product, comprising instructions, wherein when the instructions are executed by a processor, the method according to any one of claims 1 to 36 is implemented.

75. A chip, comprising a processor, wherein the processor is coupled to a memory, and is configured to execute a computer program or instructions stored in the memory, to enable the chip to implement the method according to any one of claims 1 to 36.

76. A computer-readable storage medium, wherein the storage medium stores a computer program or instructions, and when the computer program or the instructions are executed by a communication apparatus, the method according to any one of claims 1 to 36 is implemented.
